# EUROPEAN PATENT APPLICATION

(11) **EP 3 476 245 A1**
(43) Date of publication of application: **01.05.2019**
(21) Application number: 17834733.2
(22) Date of filing: 25.07.2017
(51) Int. Cl.: A45D 40/26, B65D 47/00, B65D 83/00, B29C 45/00, B29C 45/14, A45D 40/00, B29L 7/00, B29L 31/00

(54) **COMPACT CONTAINER HAVING RING BUTTON MEMBER PROVIDED THEREON AND HAVING DISCHARGE PLATE FORMED THROUGH INSERT INJECTION MOLDING**

(30) Priority: 28.07.2016 KR 20160095867; 13.12.2016 KR 20160169643
(71) Applicant: Pum-Tech Korea Co., Ltd, Incheon 21315 (KR)
(72) Inventor: LEE, Do Hoon, Incheon 21315 (KR)
(74) Representative: Eder, Michael
(86) International application number: PCT/KR2017/007983
(87) International publication number: WO 2018/021791

(57) **Abstract**

The present invention relates to a compact container having a ring button member provided thereon and having a discharge plate formed by insert injection molding, wherein a discharge means is installed inside the compact container so as to discharge a cosmetic material; a pallet is formed to pressurize the discharge means; a ring button member is formed and coupled to the outside of the pallet; a pair of compression grooves are formed on the inner peripheral edge of the ring button member so as to face each other in the diagonal direction; a pair of compression protrusions are formed on the outer peripheral edge of the pallet so as to face each other in the diagonal direction, and are inserted into the compression grooves; accordingly, even if the ring button member is pressurized while being inclined, the compression grooves of the ring button member pressurize the upper portions of the compression protrusions of the pallet such that the pallet can pressurize the discharge means vertically; pallets are formed on the upper portion of the discharge means; a discharge plate is formed as a single component through insert injection molding between the upper pallet and the lower pallet of the pallets; accordingly, the assembly process for separately coupling the discharge plate and the upper/lower pallets to the contact container is removed, thereby improving the productivity; and occurrence of a defective product in the process of assembling the discharge plate and the upper/lower pallets is prevented.

## Description

### [Technical Field]

The present invention relates to a compact container having a ring button member provided thereon and having a discharge plate formed by insert injection molding, and more particularly, to a compact container having a ring button member provided thereon and having a discharge plate formed by insert injection molding, wherein a discharge device is installed inside the compact container to discharge a cosmetic material, pallets for pressurizing the discharge device are provided, and the discharge plate is formed as a single component between an upper pallet and a lower pallet of the pallets through the insert injection molding, so that an assembly process for separately coupling the discharge plate and the upper/lower pallets to the compact container is removed so as to improve productivity, and a defective product is prevented from occurring in the process of assembling the discharge plate and the upper/lower pallets.

### [Background Art]

In general, makeup is for making a beautiful part of a body more beautiful, and for compensating for a weak point of the body. Women put on facial makeup by using basic cosmetics or color cosmetics to make their appearance more beautiful.

The color cosmetics are classified into a base makeup used for making a skin color uniform and covering defects, and a point makeup used for partially enhancing a three-dimensional effect of lips, eyes, or nails. The base makeup includes a makeup base, a foundation, and a powder, and the point makeup includes a lipstick, an eye liner, and mascara.

The foundation is classified into a solid foundation, a liquid foundation and a gel foundation according to the form of the cosmetic material. Although the solid foundation produces an effect of excellently covering the skin, the solid foundation may be agglomerated when correcting the makeup. In addition, although the liquid foundation provides a good close contact feel, the persistency of the liquid foundation is weak.

Thus, in recent years, the gel foundation, which gives fresh feelings upon use by imparting a feeling of lightness and moisture, is increasingly used.

However, in case of filling the gel foundation in a typical container for use, the same amount of cosmetic materials may not be used every time the makeup is performed, and the cosmetic materials are contaminated with bacteria and wastes because a hand of a user or a puff repeatedly makes contact with the cosmetic materials.

To solve the problems described above, as shown in FIG. 1, there is provided Korean Patent No. 10-1566114 which discloses a cosmetic container. The related art includes a discharge device for discharging a cosmetic product to an outside, and a discharge plate provided at one side of the discharge device where the cosmetic product is discharged from the discharge device, having at least one discharge port, and exposed to the outside to allow a puff of a user to make contact with the discharge plate, wherein the cosmetic product is discharged from the discharge device as the discharge plate is pressed.

The related art further includes a sealing member or a packing material closely interposed between a dispersion part and the discharge plate, so that the cosmetic product may be prevented from leaking to a part other than the discharge port of the discharge plate.

However, in the related art, when a center of the discharge plate is not pressed, an up-down movement member is inclined and caught in an inner periphery of the sealing member. Accordingly, a cosmetic material is pumped only when the user presses a center part of the discharge plate vertically, so that a pressing position is limited when pressing the discharge plate, which causes inconvenience in use.

In addition, since the related art has a structure that the sealing member or the packing material is coupled between a guide plate and the discharge plate to prevent the leakage of the cosmetic products, productivity is decreased due to an increase in an assembly process during production of products, and defective products occur in the assembly process.

### [Disclosure]

### [Technical Problem]

To solve the problems described above, the present invention provides a compact container having a ring button member provided thereon and having a discharge plate formed by insert injection molding, wherein a discharge device is installed inside the compact container to discharge a cosmetic material, pallets for pressurizing the discharge device are provided, and the discharge plate is formed as a single component between an upper pallet and a lower pallet of the pallets through the insert injection molding, so that an assembly process for separately coupling the discharge plate and the upper/lower pallets to the compact container is removed so as to improve productivity, and a defective product is prevented from occurring in the process of assembling the discharge plate and the upper/lower pallets.

In addition, the present invention provides a compact container having a ring button member provided thereon and having a discharge plate formed by insert injection molding, wherein a fusion groove is formed in a lower portion of the upper pallet of the pallets, and a fusion protrusion part corresponding to the fusion groove is provided on an upper outer side of the lower pallet, such that a fusing surface of the upper pallet and the lower pallet is widened, and the upper pallet is insert-injection-molded while surrounding an outer side of the lower pallet, so that the upper pallet and the lower pallet are fused to each other without being separated from each other, and a cosmetic material is prevented from leaking between the upper and lower pallets and the discharge plate.

### [Technical Solution]

The present invention provides a compact container having a ring button member provided thereon and having a discharge plate formed through insert injection molding, in which the compact container includes an outer container, an outer container lid hinge-coupled to one side of the outer container so as to be opened and closed, and an inner container mounted inside the outer container, the compact container including:
a discharge device installed in the inner container to discharge a cosmetic material;
a pallet coupled to the discharge device to pressurize the discharge device; and
a ring button member coupled to the pallet to pressurize the pallet,
wherein the pallet includes an upper pallet and a lower pallet, in which a discharge plate having a discharge port is formed between the upper pallet and the lower pallet through the insert injection molding, and
the upper pallet is insert-injection-molded while surrounding an outer side of the lower pallet such that the upper pallet and the lower pallet are fused to each other.

In addition, the discharge device may be a pump for pumping the cosmetic material.

In addition, a support part may be formed at a center of the lower pallet to make close contact with a bottom of the discharge plate.

In addition, the lower pallet may be provided with a seating part on which the discharge plate is seated.

In addition, a distribution passage may be formed in the lower pallet to allow the cosmetic material to be spread widely.

In addition, a mesh net may be provided on an upper portion of the distribution passage.

In addition, a covering length of the upper pallet for an upper outer side of the discharge plate is preferably 0.5 mm to 2.0 mm.

In addition, a height from a top surface of the discharge plate to an inner end of the upper pallet is preferably 0.3 mm to 1.5 mm.

In addition, a height from a top surface of the discharge plate to a top surface of the upper pallet is preferably 1.5 mm to 5.5 mm.

In addition, a fusion groove may be formed in a lower portion of the upper pallet, and a fusion protrusion part may be provided on an upper outer side of the lower pallet, such that the fusion groove and the fusion protrusion part are fused to each other.

In addition, the discharge plate may be formed of a metal, an alloy of metal, or a plated metal.

In addition, the discharge plate may be formed of a stainless steel material among metal materials.

In addition, the discharge plate may be formed of a synthetic resin or a fiber material.

### [Advantageous Effects]

In the compact container having the ring button member provided thereon and having the discharge plate formed by the insert injection molding according to the present invention, the discharge device is installed inside the compact container to discharge the cosmetic material, the pallets for pressurizing the discharge device are provided, and the discharge plate is formed as a single component between the upper pallet and the lower pallet of the pallets through the insert injection molding, so that the assembly process for separately coupling the discharge plate and the upper/lower pallets to the compact container can be removed so as to improve the productivity, and a defective product can be prevented from occurring in the process of assembling the discharge plate and the upper/lower pallets.

In addition, in the compact container having the ring button member provided thereon and having the discharge plate formed by the insert injection molding according to the present invention, the fusion groove is formed in the lower portion of the upper pallet of the pallets, and the fusion protrusion part corresponding to the fusion groove is provided on the upper outer side of the lower pallet, such that the fusing surface of the upper pallet and the lower pallet is widened, and the upper pallet is insert-injection-molded while surrounding the outer side of the lower pallet, so that the upper pallet and the lower pallet are fused to each other without being separated from each other, and the cosmetic material is prevented from leaking between the upper and lower pallets and the discharge plate.

### [Description of Drawings]

FIG. 1 shows a conventional cosmetic container.
FIG. 2 is a perspective view showing a compact container having a ring button member provided thereon and having a discharge plate formed through insert injection molding according to the present invention.
FIG. 3 is an exploded perspective view showing the compact container having the ring button member provided thereon and having the discharge plate formed through the insert injection molding according to the present invention.
FIG. 4 is a sectional view taken along line B-B of the compact container having the ring button member provided thereon and having the discharge plate formed through the insert injection molding according to the present invention.
FIG. 5 is a sectional view taken along line A-A of the compact container having the ring button member provided thereon and having the discharge plate formed through the insert injection molding according to the present invention.
FIG. 6 is a partial perspective view and partial sectional view showing a pallet of the compact container having the ring button member provided thereon and having the discharge plate formed through the insert injection molding according to the present invention.
FIG. 7 is a sectional view taken along line A-A representing that a cosmetic material is discharged by pressing the ring button member of the compact container having the ring button member provided thereon and having the discharge plate formed through the insert injection molding according to the present invention.
FIG. 8 is a sectional view taken along line A-A representing that the cosmetic material is sucked into a discharge device as the ring button member ascends in the compact container having the ring button member provided thereon and having the discharge plate formed through the insert injection molding according to the present invention.
FIG. 9 is a partial sectional view showing a mesh net provided on an upper portion of a distribution passage of the compact container having the ring button member provided thereon and having the discharge plate formed through the insert injection molding according to the present invention.

### [Best Mode]

### [Mode for Invention]

The technical objects achieved by the present invention and the implementation of the present invention will be more clearly understood by the following description of preferred embodiments. Hereinafter, a compact container having a ring button member provided thereon and having a discharge plate formed through insert injection molding according to one embodiment of the present invention will be described with reference to the accompanying drawings.

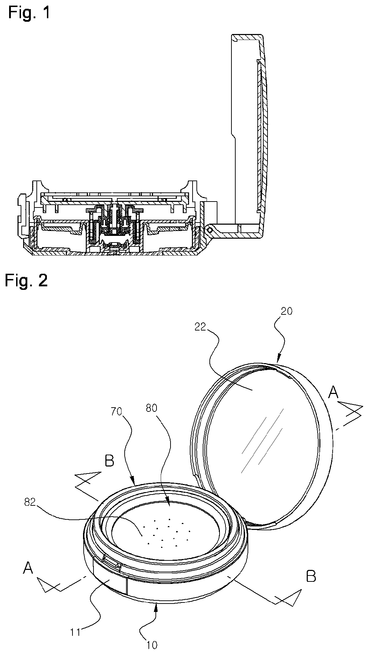

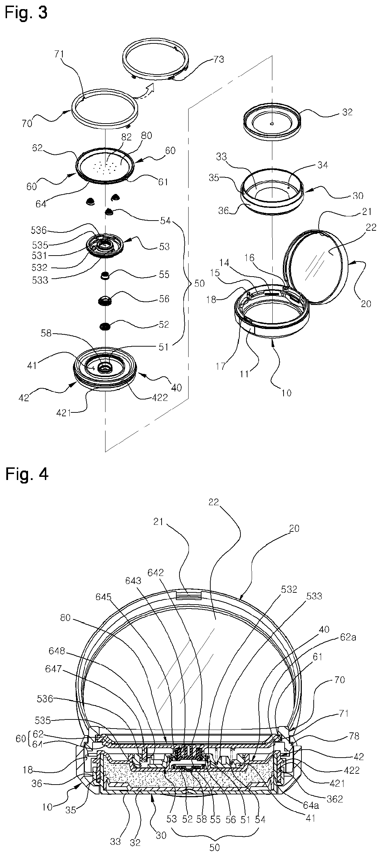

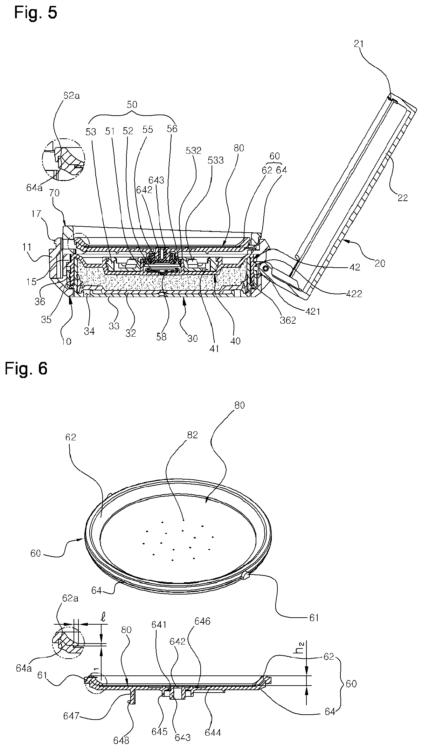

FIG. 2 is a perspective view showing a compact container having a ring button member provided thereon and having a discharge plate formed through insert injection molding according to the present invention, FIG. 3 is an exploded perspective view showing the compact container having the ring button member provided thereon and having the discharge plate formed through the insert injection molding according to the present invention, FIG. 4 is a sectional view taken along line B-B of the compact container having the ring button member provided thereon and having the discharge plate formed through the insert injection molding according to the present invention, and FIG. 5 is a sectional view taken along line A-A of the compact container having the ring button member provided thereon and having the discharge plate formed through the insert injection molding according to the present invention.

According to the present invention, as shown in FIGS. 2 to 5, a compact container having a ring button member provided thereon and having a discharge plate formed through insert injection molding, in which the compact container includes an outer container (10), an outer container lid (20) hinge-coupled to one side of the outer container (10) so as to be opened and closed, and an inner container (30) mounted inside the outer container (10), includes: a discharge device (50) for discharging a cosmetic material; a pallet (60) coupled to the discharge device (50) to pressurize the discharge device (50); and a ring button member (70) coupled to the pallet (60) to pressurize the pallet (60), wherein the pallet (60) includes an upper pallet (62) and a lower pallet (64), in which a discharge plate (80) having a discharge port (82) is formed between the upper pallet (62) and the lower pallet (64) through the insert injection molding, and the upper pallet (62) is insert-injection-molded while surrounding an outer side of the lower pallet (64) such that the upper pallet (62) and the lower pallet (64) are fused to each other.

The inner container (30) is mounted inside the outer container (10), and first and second mounting protrusions (14) and (15) protrude from an inner side surface of the outer container (10).

A pair of fastening grooves (18) coupled to fastening protrusions (78) of the ring button member (70) are formed in an inner periphery of the outer container (10).

A button (11) is formed on one side of the outer container (10), and a latching protrusion (17) protrudes from a top of the button (11).

In addition, an axial coupling groove (16) is formed on the inner side surface of the outer container (10) facing the button (11).

The outer container lid (20) opens and closes the outer container (10), and a hook (21) having a protrusion shape is provided on one side of the outer container lid (20) at a position corresponding to the latching protrusion (17) of the button (11) so as to be fastened to the latching protrusion (17) of the button (11).

In addition, a mirror (22) may be provided at an inner side of the outer container lid (20) so that a user may easily perform makeup.

A liquid or gel cosmetic material is accommodated in the inner container (30).

The inner container (30) is provided at an inner side thereof with a push plate (32) for pushing the cosmetic material upward, and the push plate (32) makes close contact with an inner side surface of the inner container (30).

The inner container (30) includes an inner container bottom surface (33), an inner wall (35) extending upward from the inner container bottom surface (33), and an outer wall (36) spaced outward from the inner wall (35) by a predetermined distance.

A coupling groove (362) is formed in an inner periphery of the outer wall (36) of the inner container (30).

In addition, the inner container bottom surface (33) of the inner container (30) is formed with an air passage hole (34) through which external air is introduced.

In addition, a discharge device support (40) having a plate shape is coupled to an upper portion of the inner container (30), in which the discharge device support (40) is coupled to the upper portion of the inner container (30), and the discharge device (50) is installed on an upper portion of the discharge device support (40).

A cylinder (51) is provided at a center of the discharge device support (40), a bushing coupling groove (41) to which a bushing (53) of the discharge device (50) is coupled is formed at an outer side of the cylinder (51), and a lower extension protrusion wheel (42) extends downward from an outer side of the discharge device support (40).

In the drawings of the present invention, it is shown that the cylinder (51) is integrally formed at the center of the discharge device support (40), so that the bushing (53) is installed on the outer side of the cylinder (51) to prevent a piston (55) fitted with a piston ring (56) from being separated from the cylinder (51), and an inner horizontal extension piece (532) is formed inward of a through-hole (531) of the bushing (53). However, the discharge device support (40) and the cylinder (51) may be separately formed, and the discharge device (50) may be provided at the center of the discharge device support (40). In this case, the bushing (53) described in the present invention may not be required.

A coupling protrusion (421) is formed on an outer periphery of the lower extension protrusion wheel (42) of the discharge device support (40) so as to be coupled to the coupling groove (362) of the inner container (30), and a mounting protrusion wheel (422) protrudes from a top of the coupling protrusion (421) so as to be fitted between the first and second mounting protrusions (14) and (15) of the outer container (10).

The discharge device (50) is installed on the discharge device support (40) to discharge the cosmetic material accommodated in the inner container (30) to an outside.

The discharge device (50) may be a pump for pumping the cosmetic material accommodated in the inner container (30).

The discharge device (50) may include the cylinder (51) formed at the center of the discharge device support (40) and formed on a bottom surface thereof with a content suction hole (58), a suction valve plate (52) mounted on a bottom surface of the cylinder (51) to selectively open and close the content suction hole (58), the bushing (53) placed on an upper end of the cylinder (51) and coupled to the outer side of the cylinder (51), an elastic member (54) mounted on an upper portion of the bushing (53) or the upper portion of the discharge device support (40) to elastically support the pallet (60), the piston (55) provided at an inner side of the cylinder (51), and the piston ring (56) fitted on the outer side of the piston (55) while making close contact with an inner side surface of the cylinder (51).

The through-hole (531) through which the piston (55) and the piston ring (56) pass is formed at a center of the bushing (53), the inner horizontal extension piece (532) extends inward of the through-hole (531), and a plurality of elastic member mounting parts (533) are provided at an outer side of the through-hole (531).

The bushing (53) is provided with a first latching sill (536) to which an anti-separation part (647)of the pallet (60) is coupled, and the first latching sill (536) serves to prevent the pallet (60) from being separated from the discharge device (50).

FIG. 6 is a partial perspective view and partial sectional view showing a pallet of the compact container having the ring button member provided thereon and having the discharge plate formed through the insert injection molding according to the present invention.

The pallet (60) is coupled to an upper portion of the discharge device (50) to fix the discharge plate (80) and to vertically move so as to pressurize the discharge device (50).

A pair of compression protrusions (61) facing each other in a diagonal direction are formed on an outer periphery of the pallet (60), in which the compression protrusions (61) of the pallet (60) are formed to correspond to positions of compression grooves (71) of the ring button member (70) so as to be fitted to the compression grooves (71) of the ring button member (70), respectively.

The compression protrusion (61) of the pallet (60) has a semicircular or circular shape so that the compression protrusion (61) may be easily rotated within the compression groove (71) of the ring button member (70).

As shown in FIG. 6, the pallet (60) includes the upper pallet (62) and the lower pallet (64), in which the discharge plate (80) is insert-injection-molded between the upper pallet (62) and the lower pallet (64).

In addition, a bottom surface of the upper pallet (62) and a top surface of the lower pallet (64) are integrally fused to each other at an outer side of the discharge plate (80) through the insert injection molding.

In other words, after the lower pallet (64) is injection-molded, the discharge plate (80) is seated on a support part (642) and a seating part (644) of the lower pallet (64), and the upper pallet (62) is injection-molded, so that the lower pallet (64) and the upper pallet (62) may be integrally fused to each other at the outer side of the discharge plate (80).

Therefore, when the compact container is assembled, a process of assembling the discharge plate (80) and the upper and lower pallets (62) and (64) may be reduced so as to improve productivity, and the cosmetic material discharged by the discharge device (80) may be prevented from leaking between the upper pallet (62) and the lower pallet (64).

In addition, as shown in FIG. 5, in the compact container according to the present invention, a fusion groove (62a) is formed in a lower portion of the upper pallet (62), and a fusion protrusion part (64a) corresponding to the fusion groove (62a) is provided on an upper outer side of the lower pallet (64), such that a fusing surface of the upper pallet (62) and the lower pallet (64) is widened, and the upper pallet (62) is insert-injection-molded while surrounding an outer side of the lower pallet (64). Accordingly, the upper pallet (62) and the lower pallet (64) are completely fused to each other without being separated from each other.

As shown in FIG. 6, when the upper pallet (62) is insert-injection-molded with the discharge plate (80), a covering length ℓ of the upper pallet (62) for an upper outer side of the discharge plate (80) is about 0.5 mm to 2.0 mm. In a case where the upper pallet (62) covers the upper outer side of the discharge plate (80) by less than 0.5 mm, a covering area of the upper pallet (62) for a top surface of the discharge plate (80) is small, so that the discharge plate (80) is not firmly fixed to the pallet (60), causing the upper discharge plate (62) to be separated upward. In addition, in a case where the upper pallet (62) covers the upper outer side of the discharge plate (80) by more than 2.0 mm, a covering area of the upper pallet (62) for the top surface of the discharge plate (80) is widened, so that utilization of space over the top surface of the discharge plate (80) becomes inefficient.

An inner end of the upper pallet (62) has a stepped configuration, and, as shown in FIG. 6, a height h1 from the top surface of the discharge plate (80) to the inner end of the upper pallet (62) is preferably 0.3 mm to 1.5 mm.

In a case where the height h1 from the top surface of the discharge plate (80) to the inner end of the upper pallet (62) is less than 0.3 mm, an end portion of the upper pallet (62) is too thin, so that the inner end of the upper pallet (62) may be easily broken even in a minute impact during a manufacturing process or when distributed and carried. In addition, in a case where the height h1 from the top surface of the discharge plate (80) to the inner end of the upper pallet (62) exceeds 1.5 mm, when the cosmetic material discharged onto the top surface of the discharge plate (80) is put on a puff while being rubbed with the puff, the cosmetic material may be contaminated since the cosmetic material caught in an edge groove between the top surface of the discharge plate (80) and the inner end of the upper pallet (62) so as to remain in the edge groove.

In addition, a height (h2) from the top surface of the discharge plate (80) to a top surface of the upper pallet (62) is 1.5 mm to 5.5 mm. In a case where the height (h2) of the upper pallet (62) is less than 1.5 mm, when the cosmetic material discharged onto the top surface of the discharge plate (80) is put on the puff while being rubbed with the puff, the cosmetic material may go over the upper pallet (62) so as to fall between the upper pallet (62) and the ring button member (70), so that an inside of the compact container may be contaminated. In a case where the height (h2) exceeds 5.5 mm, a thickness of the compact container becomes large due to the height (h2) of the upper pallet (62), resulting in reduced portability.

In addition, the support part (642) for supporting the discharge plate (80) so that the discharge plate (80) is not bent when the discharge plate (80) is pressed is integrally formed at a center of the lower pallet (64), in which a top surface of the support part (642) makes close contact with a central bottom surface of the discharge plate (80).

The lower pallet (64) is formed at the outer side thereof with a discharge passage (641) through which the cosmetic material discharged by the discharge device (50) passes.

A first lower extension protrusion wheel (643) extends from a bottom of the support part (642) of the lower pallet (64), and the first lower extension protrusion wheel (643) is coupled to the piston (55) of the discharge device (50).

A second lower extension protrusion wheel (645) fitted to an outer side of the piston ring (56) of the discharge device (50) extends downward while being spaced outward from the first lower extension protrusion wheel (643) of the lower pallet (64) by a predetermined distance.

The anti-separation part (647) for preventing the pallet (60) from being separated from the compact container extends downward from an outer side of the second lower extension protrusion wheel (645) of the lower pallet (64), in which a second latching sill (648) is formed at a bottom of the anti-separation part (647) so as to be fastened to the first latching sill (536) of the bushing (53).

A distribution passage (646) is formed in an upper portion of the lower pallet (64) to allow the cosmetic material which has passed through the discharge passage (641) to be spread widely, and the distribution passage (646) is provided at an outer side thereof with a seating part (644) on which the discharge plate (80) is seated.

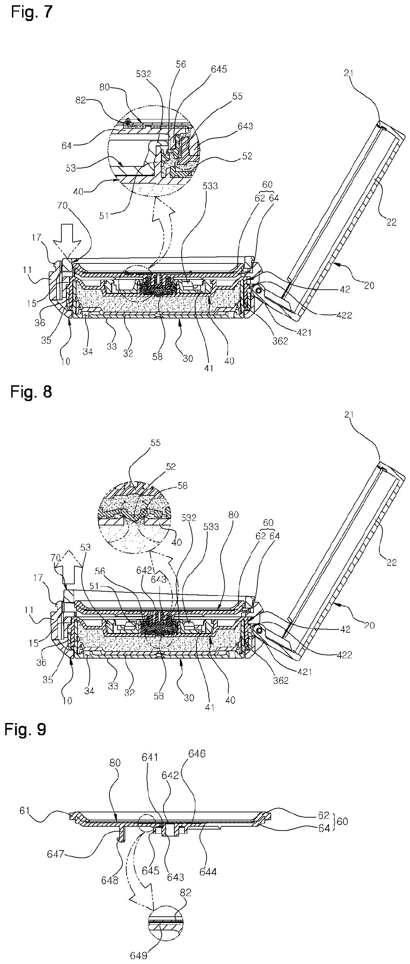

FIG. 9 is a partial sectional view showing a mesh net provided on an upper portion of a distribution passage of the compact container having the ring button member provided thereon and having the discharge plate formed through the insert injection molding according to the present invention.

As shown in FIG. 9, a mesh net (649) may be provided on an upper portion of the distribution passage (646) of the lower pallet (64), in which the mesh net (649) allows the cosmetic material pumped by the discharge device (50) to be discharged as fine particles without being agglomerated.

The upper pallet (62) may have a ring shape such that the top surface of the discharge plate (80) is exposed to the outside.

The ring button member (70) has a ring shape, is coupled to an outer side of the pallet (60), and is formed at an inner periphery thereof with a pair of compression grooves (71) facing each other in a diagonal direction.

The fastening protrusion (78) protrudes outward from an outer periphery of the ring button member (70) on an opposite side of the compression groove (71), in which the fastening protrusion (78) is fitted to the fastening groove (18) of the outer container (10) to prevent the ring button member (70) from being separated from the outer container (10).

An axial protrusion (73) is formed on one side of the outer periphery of the ring button member (70) so as to be fitted to the axial coupling groove (16) of the outer container (10).

The compression groove (71) of the ring button member (70) has a semicircular or polygonal shape.

A diameter of the compression protrusion (61) of the pallet (60) is smaller than an inner diameter of the compression groove (71) of the ring button member (70).

In other words, the compression protrusion (61) of the pallet (60) has a semicircular or circular shape, the compression groove (71) of the ring button member (70) has a semicircular shape, and the diameter of the compression protrusion (61) is smaller than the inner diameter of the compression groove (71) so as to allow the compression protrusion (61) to be fitted to the compression groove (71). Therefore, when the user pressurizes the ring button member (70) or the discharge plate (80) to discharge the cosmetic material, even if the ring button member (70) or the discharge plate (80) is pressurized in an inclined state, the compression groove (71) of the ring button member (70) is idly rotated at an upper portion of the compression protrusion (61) of the pallet (60) so that a center of pressurization may be changed, and thus, the pallet (60) may vertically pressurize the discharge device (50).

The discharge plate (80) is insert-injection-molded between the upper pallet (62) and the lower pallet (64) of the pallet (60).

The discharge plate (80) is formed with a plurality of discharge ports (82) for discharging the cosmetic material pumped by the discharge device (50) to the outside.

The discharge plate (80) may be formed of a metal, a synthetic resin, or a fiber material.

When the discharge plate (80) is formed of a synthetic resin material, the discharge plate (80) is preferably formed of at least one material among an epoxy resin, an amino resin, a phenol resin, polyester, polyethylene, an acrylic resin, polypropylene, polystyrene, polyvinyl chloride, Teflon, nylon, and a polyacetal resin.

In addition, the discharge plate (80) may be formed of various materials such as a metal alloy and a plated metal.

When the discharge plate (80) is formed of a metal material, the discharge plate (80) may be formed of at least one material among iron (Fe), aluminum (Al), copper (Cu), tungsten (W), stainless steel, nickel (Ni), tin (Sn), titanium (Ti), zinc (Zn), and gallium (Ga).

The discharge plate (80) may be formed of stainless steel, which is a material of SUS 304 among SUS 300 series having excellent corrosion resistance, acid resistance, and thermal resistance. In particular, the discharge plate (80) may be formed of a material of 304J1 to improve antibacterial and hygienic properties.

However, the present embodiment does not limit a material of a metal plate (10) to those described above, and the metal plate (10) may be formed of at least one material among 301L, 304L, 304LN, 304N1, 305EG, 309S, 310S, 316, 316L, 316LN, 316Ti, 317L, 321, 347, 329J3L, and 329LD, including 304 series.

Hereinafter, a method of assembling the compact container having the ring button member provided thereon and having the discharge plate formed through the insert injection molding, which has a configuration as described above, will be described with reference to the accompanying drawings.

In order to assemble the compact container having the ring button member provided thereon and having the discharge plate formed through the insert injection molding according to the present invention, first, as shown in FIGS. 3 to 5, the inner container (30) is mounted inside the outer container (10) having one side hinge-coupled with the outer container lid (20).

Next, the push plate (32) is fitted into the inner container (30), the cosmetic material is injected into the inner container (30), and the discharge device support (40) is coupled to the upper portion of the inner container (30), such that the lower extension protrusion wheel (42) of the discharge device support (40) is fitted between the inner wall (35) and the outer wall (36) of the inner container (30) while the mounting protrusion wheel (422) of the lower extension protrusion wheel (42) is fitted between the first and second mounting protrusions (14) and (15) of the outer container (10).

Then, the discharge device (50) is installed on the discharge device support (40), and the pallet (60) is coupled to the upper portion of the discharge device (50), such that the anti-separation part (647) of the pallet (60) is inserted into an anti-separation part insertion groove (535) of the discharge device (50), and the second latching sill (648) of the anti-separation part (647) is fastened to the first latching sill (536) of the discharge device (50).

At the same time, the first lower extension protrusion wheel (643) and the second lower extension protrusion wheel (645) of the pallet (60) are coupled to the piston (55) and the piston ring (56) of the discharge device (50), respectively.

At this time, the bottom surface of the upper pallet (62) and the top surface of the lower pallet (64) are integrally fused to each other at the outer side of the discharge plate (80) through the insert injection molding, and the central bottom surface of the discharge plate (80) makes close contact with the support part (642) of the lower pallet (64).

Finally, the ring button member (70) is mounted on an upper portion of the pallet (60), in which the compression protrusion (61) of the pallet (60) and the compression groove (71) of the ring button member (70) are aligned in positions thereof, the axial protrusion (73) of the ring button member (70) is fitted to the axial coupling groove (16) of the outer container (10), and the fastening protrusion (78) of the ring button member (70) is fitted to the fastening groove (18) of the outer container (10), thereby completely assembling the compact container having the ring button member provided thereon and having the discharge plate formed through the insert injection molding according to the present invention.

Hereinafter, the use of the compact container having the ring button member provided thereon and having the discharge plate formed through the insert injection molding, which is assembled as described above, will be described.

FIG. 7 is a sectional view taken along line A-A representing that a cosmetic material is discharged by pressing the ring button member of the compact container having the ring button member provided thereon and having the discharge plate formed through the insert injection molding according to the present invention, and FIG. 8 is a sectional view taken along line A-A representing that the cosmetic material is sucked into a discharge device as the ring button member ascends in the compact container having the ring button member provided thereon and having the discharge plate formed through the insert injection molding according to the present invention.

In order to use the compact container having the ring button member provided thereon and having the discharge plate formed through the insert injection molding according to the present invention, first, as shown in FIG. 7, the outer container lid (20) is opened, and a top surface of the ring button member (70) is pressurized.

When the ring button member (70) is pressurized, the ring button member (70) is inclined so as to move downward, and the pallet (60) mounted on a lower side of the ring button member (70) is moved downward together with the ring button member (70).

In this case, the compression protrusion (61) of the pallet (60) has a semicircular or circular shape, the compression groove (71) of the ring button member (70) has a semicircular shape, and the diameter of the compression protrusion (61) is smaller than the inner diameter of the compression groove (71) so as to allow the compression protrusion (61) to be fitted to the compression groove (71), so that, even if the ring button member (70) is pressurized in an inclined state, the compression groove (71) of the ring button member (70) pressurizes on the upper portion of the compression protrusion (61) of the pallet (60) so as to allow the pallet (60) to vertically pressurize the discharge device (50).

Thereafter, as the piston (55) and the piston ring (56) of the discharge device (50) coupled to a bottom of the pallet (60) are moved downward together with the pallet (60) due to the downward movement of the pallet (60), a volume inside the cylinder (51) is reduced.

Accordingly, a pressure is generated inside the cylinder (51), and the cosmetic material in the cylinder (51) tends to be discharged to the outside by the pressure, so that a discharge pressure is generated so as to allow the suction valve plate (52) to close the content suction hole (58) formed in the bottom surface of the cylinder (51).

At the same time, the cosmetic material accommodated in the cylinder (51) flows between the piston (55) and the piston ring (56), passes through the discharge passage (641) of the lower pallet (64), passes through the distribution passage (646) of the lower pallet (64), and is discharged through the discharge port (82) of the discharge plate (80).

Thereafter, when the pressurization of the ring button member (70) is released as shown in FIG. 8, the pallet (60) is moved upward by elasticity of the elastic member (54) which elastically supports the pallet (60), and the piston (55) and the piston ring (56) coupled to a bottom of the lower pallet (64) of the pallet (60) is moved upward together with the pallet (60), so that the volume inside the cylinder (51) becomes large so as to generate a vacuum pressure.

The suction valve plate (52) is lifted by the vacuum pressure generated inside the cylinder (51) so as to open the content suction hole (58) formed in the bottom surface of the cylinder (51). Accordingly, the cosmetic material accommodated in the inner container (30) is introduced into the cylinder (51) through the content suction hole (58) while the push plate (38) installed in the inner container (30) is moved upward.

As described above, although the compact container having the ring button member provided thereon and having the discharge plate formed through the insert injection molding according to one embodiment of the present invention has been described for illustrative purposes, the present invention is not limited thereto. It will be understood that various changes and modifications may be made by those skilled in the art without departing from the spirit and scope of the present invention as disclosed in the appended claims.

**[Description of Reference Numerals]**

| | |
|---|---|
| 10: Outer container | 16: Axial coupling groove |
| 18: Fastening groove | 20: Outer container lid |
| 30: Inner container | 40: Discharge device support |
| 50: Discharge device | 60: Pallet |
| 61: Compression protrusion | 62: Upper pallet |
| 64: Lower pallet | 70: Ring button member |
| 71: Compression groove | 73: Axial protrusion |
| 78: Fastening protrusion | 80: Discharge plate |
| 82: Discharge port | 641: Discharge passage |
| 642: Support part | 644: Seating part |
| 646: Distribution passage | 649: Mesh net |

## Claims

1. A compact container having a ring button member provided thereon and having a discharge plate formed through insert injection molding, in which the compact container includes an outer container, an outer container lid hinge-coupled to one side of the outer container so as to be opened and closed, and an inner container mounted inside the outer container, the compact container comprising:
a discharge device installed in the inner container to discharge a cosmetic material;
a pallet coupled to the discharge device to pressurize the discharge device; and
a ring button member coupled to the pallet to pressurize the pallet,
wherein the pallet includes an upper pallet and a lower pallet, in which a discharge plate having a discharge port is formed between the upper pallet and the lower pallet through the insert injection molding, and
the upper pallet is insert-injection-molded while surrounding an outer side of the lower pallet such that the upper pallet and the lower pallet are fused to each other.

2. The compact container of claim 1, wherein the discharge device is a pump for pumping the cosmetic material.

3. The compact container of claim 1, wherein a support part is formed at a center of the lower pallet to make close contact with a bottom of the discharge plate.

4. The compact container of claim 1, wherein the lower pallet is provided with a seating part on which the discharge plate is seated.

5. The compact container of claim 1, wherein a distribution passage is formed in the lower pallet to allow the cosmetic material to be spread widely.

6. The compact container of claim 5, wherein a mesh net is provided on an upper portion of the distribution passage.

7. The compact container of claim 1, wherein a covering length of the upper pallet for an upper outer side of the discharge plate is 0.5 mm to 2.0 mm.

8. The compact container of claim 1, wherein a height from a top surface of the discharge plate to an inner end of the upper pallet is 0.3 mm to 1.5 mm.

9. The compact container of claim 1, wherein a height from a top surface of the discharge plate to a top surface of the upper pallet is 1.5 mm to 5.5 mm.

10. The compact container of claim 1, wherein a fusion groove is formed in a lower portion of the upper pallet, and a fusion protrusion part is provided on an upper outer side of the lower pallet, such that the fusion groove and the fusion protrusion part are fused to each other.

11. The compact container of claim 1, wherein the discharge plate is formed of a metal, an alloy of metal, or a plated metal.

12. The compact container of claim 11, wherein the discharge plate is formed of a stainless steel material among metal materials.

13. The compact container of claim 1, wherein the discharge plate is formed of a synthetic resin or a fiber material.
